# EUROPÄISCHE PATENTSCHRIFT

(11) **EP 0 693 024 B1**
(45) Veröffentlichungstag und Bekanntmachung des Hinweises auf die Patenterteilung: **26.08.1998**
(21) Anmeldenummer: 94911002.7
(22) Anmeldetag: 07.04.1994
(51) Int. Cl.: B29C 45/67, B29C 45/17

(54) **FORMSCHLIESSEINHEIT**
DIE CLAMP UNIT
UNITE DE SERRAGE DE MOULE

(30) Priorität: 07.04.1993 AT 707/93
(43) Veröffentlichungstag der Anmeldung: 24.01.1996
(73) Patentinhaber: SVOBODA, Bruno, A-1070 Wien (AT)
(72) Erfinder: SVOBODA, Bruno, A-1070 Wien (AT)
(74) Vertreter: Gibler, Ferdinand, Dipl.Ing. Dr. techn.
(86) Internationale Anmeldenummer: AT9400042
(87) Internationale Veröffentlichungsnummer: WO9422654

(56) Entgegenhaltungen:
- EP-A- 0 011 838
- DE-A- 2 233 222
- DE-A- 2 253 451
- DE-A- 2 544 105
- FR-A- 2 589 390
- FR-A- 2 681 268
- GB-A- 1 541 160

## Beschreibung

Die Erfindung betrifft eine Formschließeinheit für eine Spritzgießvorrichtung gemäß dem Oberbegriff des Anspruches 1.

Die Aufgabe einer solchen Formschließeinheit liegt darin, daß einerseits eine bewegliche Formaufspannplatte mit hoher Geschwindigkeit gegen bzw. von einer festen Formaufspannplatte weg bewegt werden soll und anderseits bei bereits geschlossener Form eine hohe Zuhaltekraft vorgesehen werden muß, welche die durch die eingespritzte Masse erzeugte Gegenkraft kompensiert und ein Öffnen der Form, und damit einen Austritt der Spritzmasse aus der Form verhindert.

Zur Lösung dieser bekannten Aufgaben sind eine Reihe von Lösungsvorschlägen bekannt.

Typischerweise wird zwischen zwei durch vier Holme mitsammen verbundenen, feststehenden Platten eine auf diesen Holmen verschiebbar gelagerte Platte von einem Antriebsmechanismus bewegt.

In der Regel besteht dieser Mechanismus aus einem oder mehreren Hydraulikzylindern für die Eilgangbewegung und einem oder mehreren Druckkissenzylindern für die Aufbringung der Schließkraft.

Weiters wird zwischen Direktschlußmaschinen, bei denen sich die Druckkissen auf einer nachgesaugten Ölsäule stützen, und hydromechanischen Maschinen, wo die Abstützung mittels mechanischer Verriegelung erfolgt, unterschieden.

Es sind auch Systeme bekannt, welche zum Verfahren der Platte ein Kniehebelsystem verwenden.

Ein solches Kniehebelsystem wird im allagemeinen über einen zentral wirkenden Hydraulikzylinder angetrieben. Die bei dieser Ausführung verwendete zweite feste Platte muß allerdings verschiebbar sein, um bei einem Werkzeugwechsel (für unterschiedliche Stückhöhen) die Festlegung eines entsprechenden Nullpunktes zuzulassen. Dies ist insbsonders auch deshalb notwendig, da das Kniehebelsystem nur eine maximale Stellung zuläßt. Das Verschieben dieser Platte erfolgt im allgemeinen über einen Getriebemotor und ein Planetenrad und bedeutet einen weiteren konstruktiven Mehraufwand.

Es ist entsprechend den obigen Ausführungen bekannt, die Schließeinheit über einen zentral wirkenden Plungerzylinder zu betreiben, der während der Verfahrbewegung der Formaufspannplatte sein Ölvolumen über einen unmittelbar unter der Einheit angeordneten Tank austauscht. Über einen zweiten Zylinder, der gegebenenfalls auch innerhalb des Plungerzylinders angeordnet sein kann, erfolgt eine Schnellbewegung der Einheit. Dabei wird über den zweiten Zylinder Öl angesaugt und nach Schließen des Kolbenraumes über eine Pumpe Druck für die Schließkraft aufgebaut.

Weiters ist auch eine Formschließeinheit bekannt, bei der die Schließkraft über Holme, die gleichzeitig als Kolbenstangen dienen, aufgebracht wird. Diese Einheit verwendet eine symmetrische 4-Punkt Krafteinleitung, wobei das Öl durch separate Eilzylinder von einer Kolbenseite zur anderen verdrängt wird. Das Öl wird dabei über außen um die Einheit angeordnete Ölleitungen bewegt, die Holme sind an einer Ständerplatte fixiert. Durch den verwendeten Eilzylinder wird wiederum der für das Auswerfen notwendige Platz reduziert.

Durch die DE-A-2 253 451 wurde eine Formschließeinheit der eingangs erwähnten Art bekannt, bei der die Kolbenstangen mit drei axialen Bohrungen versehen sind, von denen eine mit dem schließseitigen Ringraum und eine zweite direkt mit dem öffnungsseitigen Ringraum verbunden ist. Die dritte axiale Bohrung der Kolbenstangen ist mit einem im Kolben angeordneten ein Rückschlagventil aufweisenden Raum verbunden. Dabei ergibt sich jedoch der Nachteil eines sehr komplizierten Aufbaus und einer komplizierten Steuerung der Kolben.

Weiters wurde durch die DE-A1-2 544 105 eine Formschließeinheit der eingangs erwähnten Art bekannt, bei der die Kolbenstangen mit zwei axialen Bohrungen versehen sind und bei der in den Kolben Steuerventile angeordnet sind, von denen eines eine Verbindung von der Schließ- zur Öffnungsseite des Kolbens steuert. Auch bei dieser Lösung ergibt sich der Nachteil eines sehr komplizierten Aufbaus und einer komplizierten Steuerung.

Eine weitere Formaufspanneinheit wurde durch die FR-A-2 589 390 bekannt, bei der volle Kolbenstangen vorgesehen sind und die Ansteuerung der Kolben über eine relativ große Anzahl von Umschalt und Steuerventilen, die eine aufwendige Verrohrung erfordern.

Weiter wurde auch durch die GB-A-1 541 160 eine Formaufspanneinheit bekannt, bei der die schließ- und öffnungsseitigen Ringräume bezogen auf die Führungsholme paarweise unterschiedlich groß sind, sodaß bei einem Paar von Führungsholmen die Öffnungsseite des Kolbens die größere Fläche aufweisen und beim zweiten Paar von Führungsholmen die Schließseiten der Kolben die größeren Flächen aufweisen.

Aufgabe der Erfindung ist es, eine Formschließeinheit der oben genannten Bauart unter Vermeidung der Nachteile gemäß dem bekannten Stand der Technik zu schaffen.

Es ist damit Aufgabe der Erfindung, eine Formschließeinheit mit einfachem Aufbau unter Vermeidung, einer Abstützplatte, mit kürzerer Bauform, geringerem Gewicht, besserer Zugänglichkeit und damit auch mehr Raum für die Ausstoßvorrichtung zu schaffen.

Eine weitere Aufgabe der Erfindung ist es, einen reaktionsschnellen Bewegungsablauf der Formschließeinheit ohne zusätzliche konstruktive Sondermaßnahmen, insbeondere ohne Eilgangzylinder, sowie eine höhere Formöffnungskraft vorzusehen.

Es ist auch Aufgabe der Erfindung, einen Nachsaugtank zu vermeiden, sowie für den Einbau sperriger Formen ein einfaches und rasches Holmziehen zu ermöglichen.

Erfindungsgemäß wird dies bei einer Formschließeinheit der eingangs erwähnten Art durch die kennzeichnenden Merkmale des Anspruches 1 erreicht.

Über die Steuerrohre kann der Schließdruck auf sehr einfache Weise dem schließseitigen Ringraum zugeleitet werden, wobei das Steuerrohr selbst die Kolbenstangenbohrung verschließt, um die Verbindung beim Aufbringen von Druck zu verschließen und damit als Ventil zu arbeiten. Im an den Überströmbereich für Hydraulikflüssigkeit anschließenden Bereich der Kolbenstangenbohrung ist nach einer weiteren Ausgestaltung der Erfindung ein Ventilsitz für das Steuerrohr angeordnet.

Durch die vorgeschlagenen Maßnahmen ergibt sich auch der Vorteil einer sehr einfachen und kompakten Bauweise, wobei auf im Bereich der Kolben angeordnet Ventile verzichtet wird. Außerdem erübrigen sich durch die Steuerrohre auch aufwendige Steuerventile.

Vorteilhafterweise sind zur Betätigung der Einheit jeweils nur zwei einander diagonal gegenüberliegende Hydraulikzylinder in Betrieb.

Durch die Merkmale des Anspruches 2 ist es auf einfache Weise möglich die erfindungsgemäße Aufspanneinheit zu steuern.

In diesem Zusammenhang ist es vorteilhaft die Merkmale des Anspruches 3 vorzusehen. Damit ist es auf einfache Weise möglich die schließseitigen Ringräume aller Holme mit Druck zu beaufschlagen und so hohe Schließkräfte auf die Form aufbringen zu können.

Nach einer weiteren Ausbildung der Erfindung, welche insbesonders beim Einsetzen bzw. Entfernen großer Formen bedeutsam ist, ist wenigstens ein Führungsholm in der festen Formaufspannplatte lösbar, vorzugsweise über einen Schnellverschluß, angeordnet.

Damit ist es nicht mehr notwendig, beim Holmziehen eine Mutter an der Hinterseite der Platte zu lösen, was eine entscheidende Verringerung an Aufwand bedeutet.

Nach einer Weiterbildung der Erfindung kann auch vorgesehen sein, daß der dem herausziehbaren Führungsholm zugeordnete Schließzylinder, das Steuerrohr und die Kolbenstange gegenüber den entsprechenden, den weiteren Führungsholmen zugeordneten Elementen verlängert ausgebildet sind.

Weiters ist eine vorteilhafte Weiterbildung dadurch gekennzeichnet, daß der zum Bewegen des Führungsholmes vorgesehene Schließzylinder einzeln angesteuert ist.

Die Erfindung wird nun anhand eines Ausführungsbeispieles unter Zuhilfenahme der angeschlossenen Zeichnungen näher beschrieben.

Es zeigen:
Fig.1 eine Spritzgießvorrichtung mit der erfindungsgemäßen Formschließeinheit, und einen Schnitt X-X durch die Formschließeinheit;
Fig.2 die erfindungsgemäße Formschließeinheit in Schließstellung;
Fig.3 die erfindungsgemäße Formschließeinheit in geschlossenem Zustand;
Fig.4 die erfindungsgemäße Formschließeinheit in Öffnungsstellung;
Fig.5 die erfindungsgemäße Formschließeinheit in geschlossenem Zustand unter Aufbringung erhöhter Öffnungskraft; und
Fig.6 die erfindungsgemäße Formschließeinheit mit gezogenem Holm.

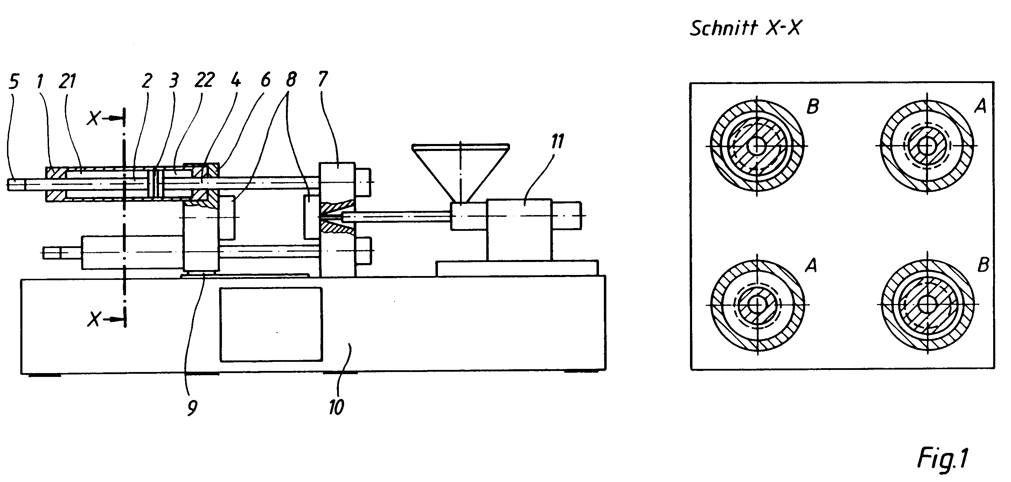

Fig.1 zeigt eine Spritzgießmaschine in einem typischen Aufbau.

Im Schließzylinder 1 ist ein von einer Kolbenstange 2 betätigter Schließkolben 3 angeordnet. Ebenfalls in den Schließzylinder 1 ragt der an den Kolben anschließende Führungsholm 4. Zum Ansteuern der Kolbenstange 2 ist ein Steuerzylinder 5 vorgesehen. Die bewegliche Formaufspannplatte 6 ist entlang der in ihren Eckbereichen angeordneten Führungsholmen 4 beweglich. Die Führungsholme 4 selbst sind mit der am Maschinenrahmen 10 befestigten festen Formaufspannplatte 7 fixiert. Sowohl die bewegliche als auch die feste Formaufspannplatte 6,7 tragen Formhälften 8, in welche in geschlossenem Zustand der Formschließeinheit von einem Spritzaggregat 11 Formmasse eingespritzt wird, wobei die dabei entstehende Formauftriebskraft kleiner sein muß als die Formzuhaltekraft der Schließeinheit.

Der Schnitt X-X zeigt die symmetrisch angeordneten Schließzylinder, wobei jeweils einander diagonal gegenüberliegende Zylinder A,B ein beim Schließen bzw. Öffnen aktives Paar darstellen und mit identen Kolbenstangendurchmessern ausgestaltet sind. Dadurch sind die Anpreßflächen der Kolben eines jeden Paares A,B an der Seite der Kolbenstange jeweils gleich groß ausgebildet.

Der Arbeitszyklus beginnt mit dem Schließen der Form. Die bewegliche Formaufspannplatte 6 fährt, angetrieben von den Schließzylindern 1 und gelagert auf der Führung 9, im Eilgang gegen die feste Formaufspannplatte 7, wobei die Formschließbewegung von den beiden einander diagonal gegenüberliegenden Schließzylindern B durchgeführt wird. Bei Erreichen des Formschlusses wird durch Druckölzufuhr im schließseitigen Ringraum 22 der Schließdruck zur Erzeugung der Formhaltekraft aufgebaut.

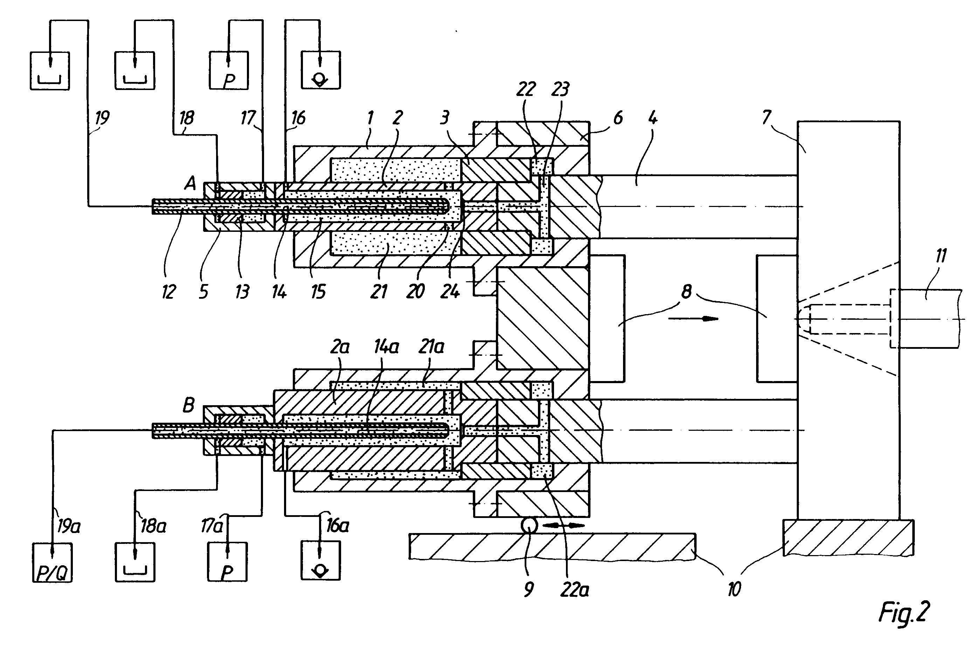

Wie aus Fig.2 ersichtlich, ist jede Kolbenstange mit einer Kolbenstangenbohrung 15 versehen. In jeder Kolbenstangenbohrung ist ein Steuerrohr 12 vorgesehen, welches wiederum mit einer Steuerrohrbohrung versehen ist, um eine Verbindung zum schließseitigen Ringraum 22 offen zu halten. Mit Hilfe des Steuerrohres 12 kann eine Verbindung zum öffnungsseitigen Ringraum 21, je nach dessen Stellung offengehalten oder geschlossen werden.

Das Steuerrohr ist von einem mit diesem fest verbundenen Steuerkolben 13 angetrieben.

Die Steuerrohrbohrung 14, der Steuerkolben 13 sowie die Kolbenstangenbohrung 15 sind mit Hydraulikflüssigkeit transportierenden Leitungen 16,17,18,19; 16a,17a,18a,19a verbunden, welche entsprechend den zu erfüllenden Aufgaben der Zu- oder Abfuhr von Flüssigkeit dienen, oder aber auch gesperrt sind.

Beim Schließen der Form nach Fig.2 stehen die Steuerrohre aller vier Schließzylinder in der Stellung "offen" und werden in dieser Stellung durch eine Druckölbeaufschlagung des Steuerkolbens 13 über die Leitungen 17(17a) gehalten.

Die Steuerrohrbohrungen 14 der beiden Schließzylinder A sind über die Anschlußleitung 19 mit dem Tank (symbolisch dargestellt) verbunden.

Die Zuführkanäle 14a der beiden Schließzylinder B sind über die Anschlußleitungen 19a mit dem Druckerzeuger verbunden, der Hydraulikflüssigkeit in das System führt. Durch die unterschiedlich großen Ringflächen der Ringräume 21a und 22a ergibt sich eine wirksame Ringfläche, welche der Differenz dieser beiden Ringflächen entspricht und bei Druckölbeaufschlagung durch den Zuführkanal 14a eine Bewegung der beweglichen Formaufspannplatte 6 in Richtung feste Aufspannplatte 7 und damit ein Schließen der Form bewirkt.

Das Ölvolumen der Ringräume 21 der beiden Schließzylinder A wird über die Überströmkanäle 20 und die weiteren Überströmkanäle 23 in den schließseitigen Ringraum 22 geschoben, wobei die Volumsdifferenz über die Steuerrohrbohrungen 14 und die Anschlußleitungen 19 zum Öltank zurückfließen.

Nach dem Schließen der Form ist es notwendig, einen erhöhten Druck aufzubringen, um mit dem Einspritzen der Formmasse in die Spritzform beginnen zu können.

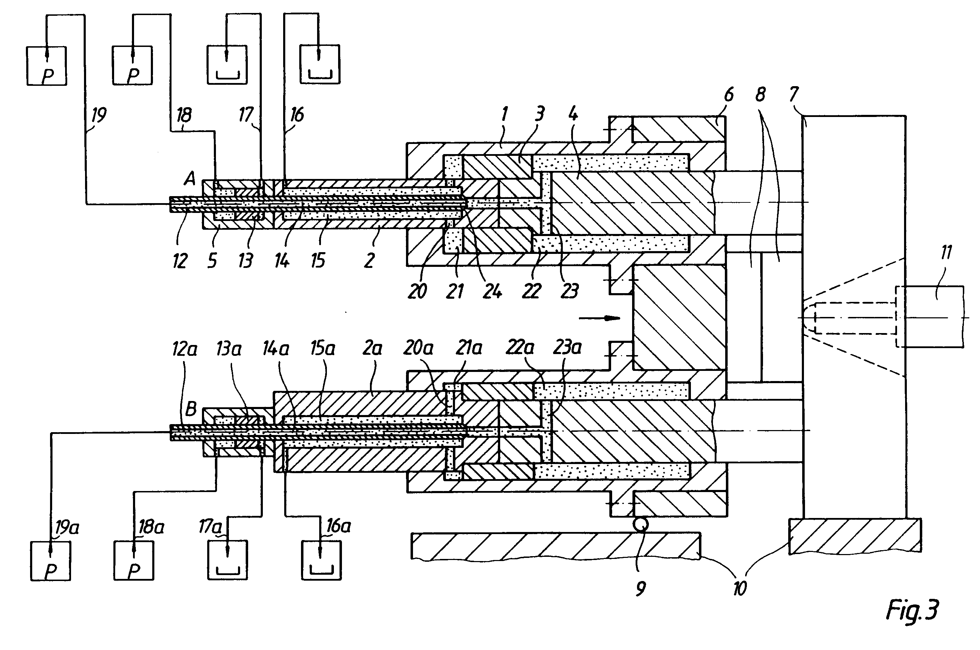

Dieser Schritt ist in Fig.3 dargestellt.

Die Steuerrohre 12,12a aller vier Schließzylinder werden mittels der entsprechenden Steuerkolben 13,13a soweit in Richtung Schließkolben 3 längsverschoben, bis das Steuerrohr mit einem an seinem Ende angeordneten Richtkegel im Ventilsitz 24 aufsitzt, und somit die Verbindung zwischen den öffnungsseitigen Ringräumen 21, 21a und den schließseitigen Ringräumen 22, 22a unterbricht. Die Betätigung der Steuerkolben 13,13a erfolgt über die Leitungen 18,18a.

Über die Leitungen 16,16a, die Kolbenstangenbohrung 15,15a und den Überströmkanal 20,20a werden die öffnungsseitigen Ringräume 21,21a druckentlastet. Zugleich werden über die Anschlußleitungen 19,19a die Steuerrohrbohrungen 14,14a sowie die weiteren Überströmkanäle 23,23a die schließseitigen Ringräume 22, 22a mit Drucköl beaufschlagt und somit die Zuhaltekraft erzeugt.

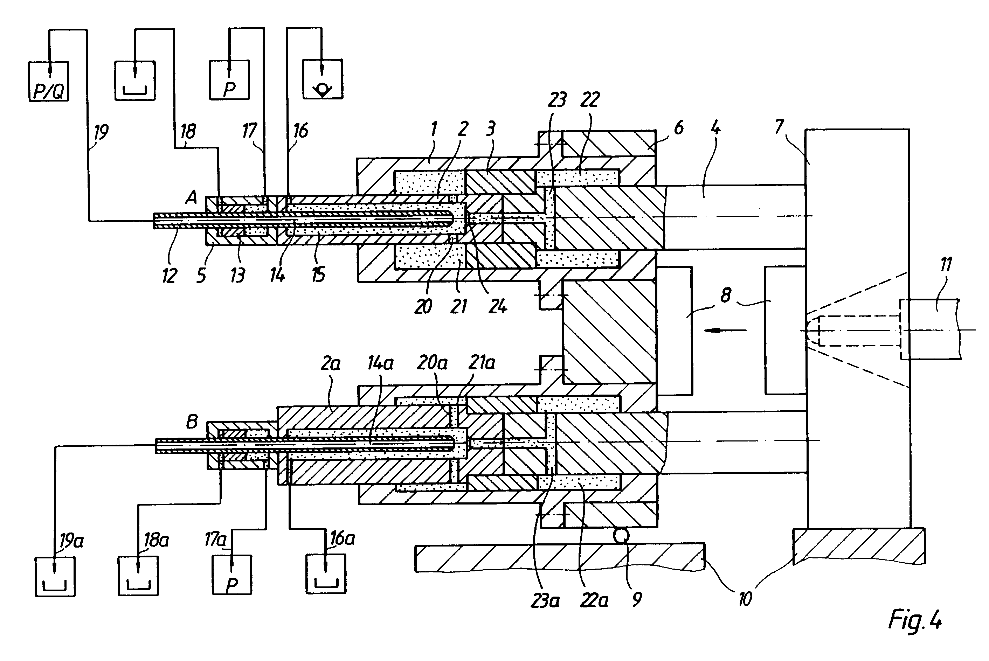

Nach erfolgtem Einspritzen der Formmasse erfolgt ein Öffnen der Formschließeinheit nach Fig.4.

Diese Bewegung wird von den beiden einander diagonal gegenüberliegenden Schließzylindern A durchgeführt. Die Steuerrohrbohrungen 14a der beiden Schließzylinder B sind über die Anschlußleitung 19a mit dem Tank verbunden, wohingegen die Steuerrohrbohrungen 14 über die Leitungen 19 mit dem Druckerzeuger verbunden sind. Die Steuerrohre 12,12a werden vom entsprechenden, über die Leitungen 17, 17a betätigten Steuerzylindern 13,13a, in Offenstellung gebracht. Zufolge der unterschiedlich großen Ringflächen der Ringräume 21 und 22 ergibt sich eine wirksame Ringfläche, welche der Differenz dieser beiden Ringflächen entspricht und bei Druckölbeaufschlagung durch den Zuführkanal 14 eine Bewegung der beweglichen Formaufspannplatte von der festen Aufspannplatte 7 weggerichtet und damit ein Öffnen der Formhälften 8 bewirkt. Dabei fließt das Ölvolumen der Ringräume 22a der beiden Schließzylinder B über die Überströmkanäle 20a,23a in die Ringräume 21a, und die Volumsdifferenz über die Steuerrohrbohrung 14a in den Öltank.

Für den Fall, daß sich das Werkstück in der Form festgefressen hat oder auch mit Hinterschneidungen ausgebildet ist, ist beim Öffnen wenigstens kurzfristig eine erhöhte Öffnungskraft notwendig.

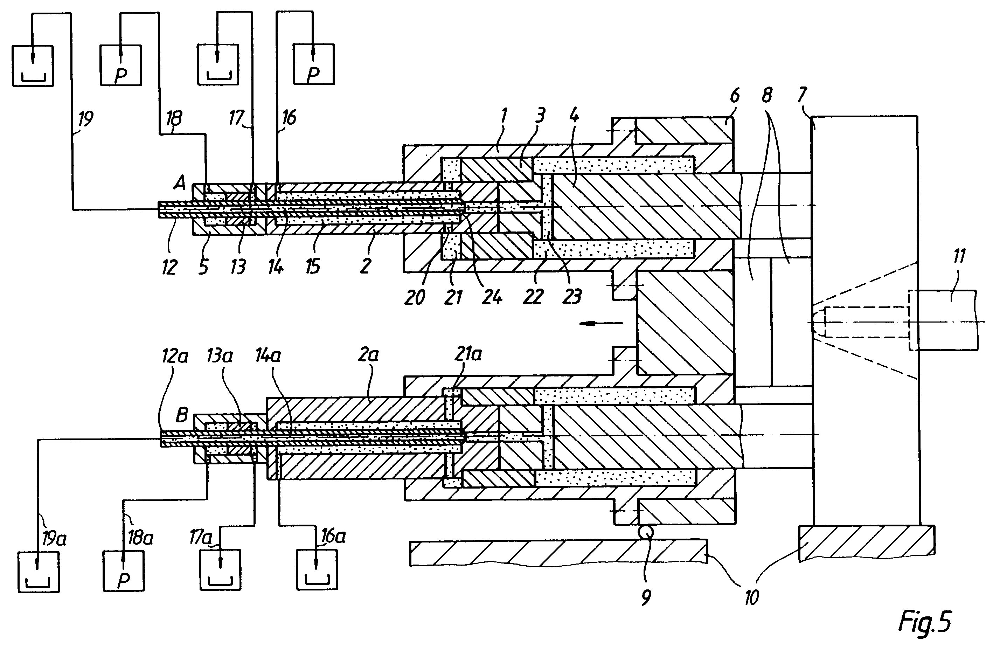

Die entsprechende Schaltungsanordnung ist in Fig.5 dargestellt.

Die Steuerrohre 12,12a werden über die Steuerkolben 13,13a nach vorne geschoben und die Ventile 24 verschlossen. Anschließend wird die Kolbenstangenbohrung 15 der Schließzylinder A mit dem Druckerzeuger verbunden und der Ringraum 21 unter Druck gesetzt. Dabei wird etwa 50% der Schließkraft aufgebracht. Diese erhöhte Öffnungskraft ist für das Trennen der Formhälften 8 über nur wenige "mm" notwendig, dann kann wieder auf die in Fig. 4 dargestellte Schaltung zum Öffnen der Form umgeschaltet und die Sperrventile 24 geöffnet werden.

Um sperrige Teile aus der Formschließeinheit entfernen zu können, wird im allgemeinen der vordere obere Holm entfernt.

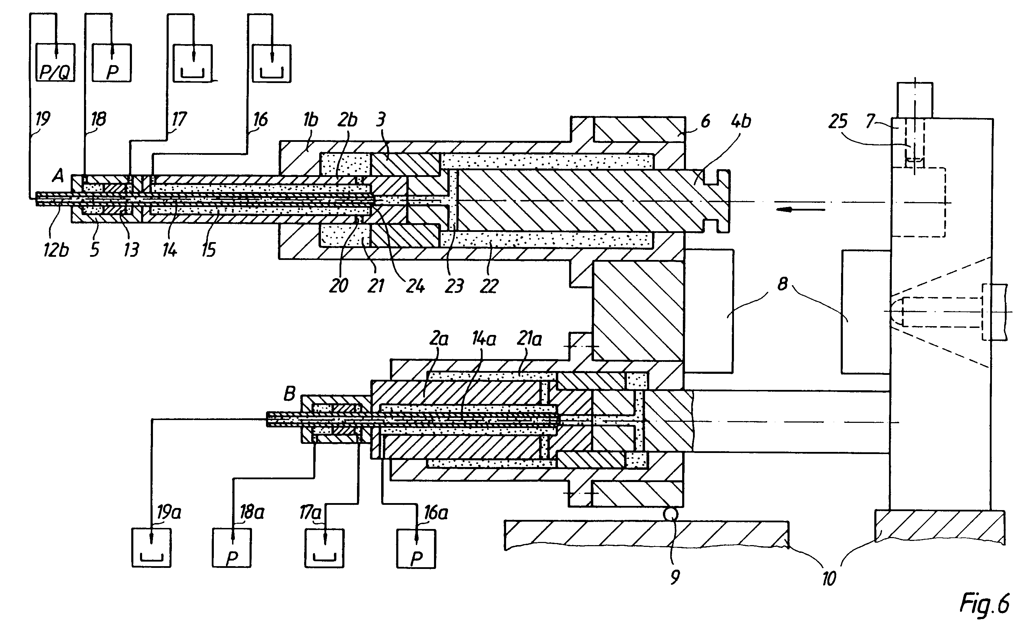

Die Schaltungsanordnung für das Holmziehen ist in Fig.6 dargestellt.

Dabei entspricht die Schaltung der Schließzylinder B jener bei Aufbringung der erhöhten Öffnungskraft für Schließzylinder A.

Das Steuerrohr 12b ist über die Leitung 19 mit dem Druckerzeuger verbunden. Das Ventil 24 ist geschlossen. Das Druckmedium gelangt über den Überströmkanal 23 in den Ringraum 22. Es erfolgt daher durch das schließseitige Aufbringen von Druck im ausgewählten Zylinder eine Bewegung des Führungsholmes 4b weg von der festen Formaufspannplatte 7, während die verbleibenden drei Schließzylinder dagegen halten.

Um den zu entfernenden Führungsholm 4b auch aus der festen Aufspannplatte 7 entfernen zu können, ist ein Schließmechanismus vorgesehen. Dazu ist das Ende des Führungsholmes 4b mit einer Nut versehen, in welche ein Verriegelungselement 25 formschlüssig eingreift.

## Patentansprüche

1. Formschließeinheit für eine Spritzgießvorrichtung, mit einem Maschinenrahmen (10), einer beweglichen und einer festen Formaufspannplatte (6, 7), die über vier in den Plattenecken angeordnete Führungholme (4, 4b) verbunden sind, wobei die bewegliche Formaufspannplatte (6) über mit ihr verbundene, in Verlängerung der Holmachsen angeordnete Schließzylinder (1) entlang der Führungsholme (4, 4b) bewegbar ist, wobei die Durchmesser jeweils zweier diagonal gegenüberliegender Kolbenstangen (2, 2b) kleiner bzw. größer als die Durchmesser der ident ausgebildeten Führungsholme (4, 4b) sind, wodurch die öffnungs- bzw. schließseitige Anpreßfläche der Kolben (3) eines jeden Schließzylinders (1) unterschiedlich groß ist und an die entsprechenden Anpreßflächen jedes Kolbens (3) ein um die Kolbenstange (2, 2b) angeordneter, öffnungsseitiger und ein um den Führungsholm (4, 4b) angeordneter, schließseitiger Ringraum (21, 21a und 22, 22a) zur Aufnahme von Hydraulikflüssigkeit vorgesehen ist und die dem jeweiligen Kolben (3) zugeordnete Kolbenstange (2, 2b) mit einer Kolbenstangenbohrung (15) zum Umspülen von Hydraulikflüssigkeit versehen ist, **dadurch gekennzeichnet**, daß in jeder Kolbenstangenbohrung (15) der Kolbenstangen (2, 2b) ein Steuerrohr (12, 12a, 12b) zum Steuern der Umspülung axial verschiebbar gehalten ist, wobei die Kolbenstangenbohrungen (15) der Kolbenstangen (2, 2b) über Überstromkanäle (20, 20a) mit den öffnungsseitigen Ringräumen (21, 21a) und über koaxiale Kanäle und weiteren Überstromkanälen (23, 23a) mit den schließseitigen Ringräumen (22, 22a) verbunden sind.

2. Formschließeinheit nach Anspruch 1, **dadurch gekennzeichnet**, daß jedes Steuerrohr (12, 12a, 12b) von einem Steuerzylinder (5, 5a) bzw. einen in diesem gehaltenen und mit dem Steuerrohr (12, 12a, 12b) direkt verbundenen Steuerkolben (13, 13a) angetrieben ist.

3. Formschließeinheit nach Anspruch 1, **dadurch gekennzeichnet**, daß im an die Überströmkanäle (20,20a) für Hydraulikflüssigkeit anschließenden Bereich der Kolbenstangenbohrung (15) ein den zum schließseitigen Ringraum (22, 22a) führenden Kanal umgebender Ventilsitz (24) zur Aufnahme des ein Sperrventil bildenden Steuerrohres (12,12a) angeordnet ist.

4. Formschließeinheit nach Anspruch 1, **dadurch gekennzeichnet**, daß wenigstens ein Führungsholm (4b) in der festen Formaufspannplatte (7) lösbar, vorzugsweise über einen Schnellverschluß (25), angeordnet ist.

5. Formschließeinheit nach Anspruch 1 oder 4, **dadurch gekennzeichnet**, daß bei zumindest einem Schließzylinder durch Druckbeaufschlagung des schließseitigen Ringraums (22) und nach Lösen des lösbaren Führungsholmverschlusses (25) in der festen Aufspannplatte (7) der Führungsholm (4b) axial verschiebbar ist.

6. Formschließeinheit nach den Ansprüchen 4 und 5, **dadurch gekennzeichnet**, daß der dem bewegbaren Führungsholm (4b) zugeordnete Schließzylinder (1b), das Steuerrohr (12b) und die Kolbenstange (2b) gegenüber den entsprechenden, den weiteren Führungsholmen zugeordneten Elementen verlängert ausgebildet sind.

7. Formschließeinheit nach Anspruch 4, **dadurch gekennzeichnet**, daß der zum Bewegen des Führungsholmes (4b) vorgesehene Schließzylinder hydraulisch einzeln angesteuert ist.

8. Formschließeinheit ach einem der Ansprüche 1 bis 7, **dadurch gekennzeichnet**, daß die bewegliche Formaufspannplatte (6) über eine Linearführung (9) am Maschinenrahmen (10) längsverschiebbar gelagert ist.

## Claims

1. Mould-clamping unit for an injection-moulding apparatus, having a machine frame (10), a movable platen (6) and a fixed platen (7), the two platens being connected via four guide pillars (4, 4b) arranged in the platen corners, it being possible for the movable platen (6) to be moved along the guide pillars (4, 4b) via closing cylinders (1) which are connected to it and are arranged in extension of the pillar axes, the diameter of in each case two diagonally opposite piston rods (2, 2b) being smaller or larger than the diameter of the identically designed guide pillars (4, 4b), this resulting in the pressure-exerting surfaces at the opening end and closing end of the pistons (3) of each closing cylinder (1) being of different sizes, and there being provided on the corresponding pressure-exerting surfaces of each piston (3) an opening-end annular space (21, 21a) arranged around the piston rod (2, 2b) and a closing-end annular space (22, 22a) arranged around the guide pillar (4, 4b), the two annular spaces being intended for receiving hydraulic fluid, and the piston rod (2, 2b) assigned to the respective piston (3) being provided with a piston-rod bore (15) for the circulation of hydraulic fluid, characterized in that a control tube (12, 12a, 12b) for controlling the circulation is retained in an axially displaceable manner in each piston-rod bore (15) of the piston rods (2, 2b), the piston-rod bores (15) of the piston rods (2, 2b) being connected to the opening-end annular spaces (21, 21a) via overflow ducts (20, 20a) and to the closing-end annular spaces (22, 22a) via coaxial ducts and other overflow ducts (23, 23a).

2. Mould-clamping unit according to Claim 1, characterized in that each control tube (12, 12a, 12b) is driven by a control cylinder (5, 5a) and a control piston (13, 13a) which is retained in said control cylinder and is connected directly to the control tube (12, 12a, 12b).

3. Mould-clamping unit according to Claim 1, characterized in that arranged in that region of the piston-rod bore (15) which adjoins the overflow ducts (20, 20a) for hydraulic fluid is a valve seat (24) which encloses the duct leading to the closing-end annular space (22, 22a) and is intended for receiving the control tube (12, 12a), which forms a shut-off valve.

4. Mould-clamping unit according to Claim 1, characterized in that at least one guide pillar (4b) is arranged releasably, preferably via a quick-action closure (25), in the fixed platen (7).

5. Mould-clamping unit according to Claim 1 or 4, characterized in that, in the case of at least one closing cylinder, the guide pillar (4b) can be displaced axially by subjecting the closing-end annular space (22) to pressure and once the releasable guide-pillar closure (25) in the fixed platen (7) has been released.

6. Mould-clamping unit according to Claims 4 and 5, characterized in that the closing cylinder (1b) assigned to the movable guide pillar (4b), the control tube (12b) and the piston rod (2b) are designed to be longer than the corresponding elements assigned to the other guide pillars.

7. Mould-clamping unit according to Claim 4, characterized in that the closing cylinder provided for moving the guide pillar (4b) is activated hydraulically on its own.

8. Mould-clamping unit according to one of Claims 1 to 7, characterized in that the movable platen (6) is mounted on the machine frame (10) such that it can be displaced longitudinally via a linear guide (9).

## Revendications

1. Unité de fermeture de moule destinée à un dispositif de moulage par injection, comportant un bâti machine (10), une plaque mobile de bridage de moule et une plaque fixe de bridage de moule (6, 7), ces plaques étant reliées par l'intermédiaire de quatre longerons de guidage (4, 4b) disposés aux angles des plaques, la plaque mobile de bridage de moule (6) étant déplaçable le long des longerons de guidage (4, 4b) à l'aide du vérin de fermeture (1) qui lui est relié, dans le prolongement des axes de longeron, le diamètre de chaque paire de tiges de piston (2, 2b) diamétralement opposées étant plus petit ou plus grand que le diamètre des longerons de guidage (4, 4b) de réalisation identique, les surfaces de pressage situées côté ouverture ou côté fermeture du piston (3) de chaque vérin de fermeture (1) étant d'aires différentes et sur les surfaces de pressage correspondantes de chaque piston (3) étant prévu un espace annulaire (21, 21a et 22, 22a), autour de la tige de piston (2, 2b), côté ouverture, et un espace annulaire autour du longeron de guidage (4, 4b), côté fermeture, en vue de recevoir du liquide hydraulique, et la tige de piston (2, 2b), associée au piston (3) respectif, étant pourvue d'un perçage de tige de piston (15) destiné à permettre le balayage par du liquide hydraulique, caractérisé par le fait que, dans chaque perçage de tige de piston (15) des tiges de piston (2, 2b), un piston de commande (12, 12a, 12b), destiné à commander le balayage, est maintenu déplaçable axialement, les perçages de tige (15) des tiges de piston (2, 2b) étant reliés, par des canaux de déversement (20, 20a), aux espaces annulaires (21, 21a) situés côté ouverture et reliés, par des canaux coaxiaux et d'autres canaux de déversement (23, 23a), aux espaces annulaires (22, 22a) situés côté fermeture.

2. Unité de fermeture de moule selon la revendication 1, caractérisée par le fait que chaque tube de commande (12, 12a, 12b) est entraîné par un vérin de commande (5, 5a), ou un piston de commande (13, 13a), qu'il contient et est directement relié au tube de commande (12, 12a, 12b).

3. Unité de fermeture de moule selon la revendication 1, caractérisée par le fait que dans la zone, connexe aux canaux de déversement (20, 20a) destinés au liquide hydraulique, du perçage de tige de piston (15) est disposé un siège de soupape (24) entourant le canal menant à l'espace annulaire situé côté fermeture (22, 22a), en vue de recevoir le tube de commande (12, 12a) constituant une soupape de blocage.

4. Unité de fermeture de moule selon la revendication 1, caractérisée par le fait qu'au moins un longeron de guidage (4b) est disposé de façon désolidarisable dans la plaque de bridage de moule fixe (7), de préférence par l'intermédiaire d'une fermeture rapide (25).

5. Unité de fermeture de moule selon la revendication 1 ou la revendication 4, caractérisée par le fait qu'avec au moins un vérin de fermeture, par exposition à une pression de l'espace annulaire (22) situé côté fermeture et après désolidarisation de la fermeture du longeron de guidage désolidarisable (25) prévue dans la plaque de bridage fixe (7), le longeron de guidage (4b) est déplaçable axialement.

6. Unité de fermeture de moule selon les revendication 4 et 5, caractérisée par le fait que le vérin de fermeture (1b) associé au longeron de guidage (4b) déplaçable, le tube de commande (12b) et la tige de piston (2b) sont réalisés prolongés par rapport aux éléments correspondants, associés aux autres longerons de guidage.

7. Unité de fermeture de moule selon la revendication 4, caractérisée par le fait que le vérin de fermeture prévu pour le déplacement du longeron de guidage (4b) est susceptible d'être commandé individuellement de façon hydraulique.

8. Unité de fermeture de moule selon l'une des revendications 1 à 7, caractérisée par le fait que la plaque de bridage de moule mobile (6) est montée déplaçable longitudinalement, par l'intermédiaire d'un guidage linéaire (9) monté sur un bâti machine (10).
